# EUROPEAN PATENT APPLICATION

(11) **EP 4 546 587 A2**
(43) Date of publication of application: **30.04.2025**
(21) Application number: 24205938.4
(22) Date of filing: 10.10.2024
(51) Int. Cl.: H02H 3/087, H02H 7/12

(54) **ELECTRICAL POWER SUPPLY WITH A DC/DC VOLTAGE CONVERTER**

(30) Priority: 26.10.2023 US 202363545810 P; 10.11.2023 US 202363597750 P; 09.10.2024 US 202418910166
(71) Applicant: Aptiv Technologies AG, 8200 Schaffhausen (CH)
(72) Inventor: AGARWAL, Rachit, 8200 Schaffhausen (CH); WANG, Yiqi, 8200 Schaffhausen (CH); GONG, Xianzhi, 8200 Schaffhausen (CH); GUO, Wei, 8200 Schaffhausen (CH)
(74) Representative: Bardehle Pagenberg Partnerschaft mbB Patentanwälte Rechtsanwälte

(57) **Abstract**

An electrical power supply (100, 400) designed to supply electrical power to an electrical power bus (204, 404) is presented herein. The electrical power supply (100, 400) comprises an electronic controller (208, 408) connected to a DC/DC converter (206, 406) and a current sensor (216, 416) for measuring the converter's current. The DC/DC converter (206, 406) is linked to a power conductor of the electrical power bus (204, 404) through a first switch (210, 410) and to a ground conductor through a second switch (212, 412). The electronic controller (208, 408) is programmed to manage the first and second switches (210, 212, 410, 412), disconnecting the DC/DC converter (206, 406) from the electrical power bus (204, 404) when the current surpasses a predetermined threshold. This innovative system ensures efficient power management and protection against overcurrent situations in electrical power supply applications.

## Description

This disclosure is directed to an electrical power supply, particularly to a an electrical power supply with a boost/buck DC/DC voltage converter having undervoltage/overcurrent lockout features.

Typically, an electrical power supply connected to an electrical power bus has no ability to control the current sourced from or provided to a charge storage medium, such as a capacitor or battery. An example of this may be found in a voltage stabilization system that increases the voltage of the electrical power bus while engaging the starter system of an internal combustion engine. The voltage stabilization system may include a DC/DC converter to recharge the charge storage medium. For example, the DC/DC converter may be connected to the negative side of the electrical power bus. Another example is a backup power supply module which increases the voltage of the voltage bus of a vehicle when the bus voltage sags. This module also includes a parallel DC/DC converter to recharge the charge storage medium but is not configured to conduct the full bus current.

The voltage stabilization systems and backup power supply modules described here do not anticipate the effect of the bus voltage going to zero during certain use cases, e.g., during periods when the engine has stopped during a start/stop cycle. The DC/DC converter may allow current from the charge storage medium to drain to the voltage bus any time the bus voltage is lower than the charge storage medium voltage. This depletes energy in the charge storage medium which needs to be replaced after the bus voltage recovers and rises above the charge storage medium voltage.

In some aspects, the techniques described herein relate to an electrical power supply configured to provide electrical power to an electrical power bus, the electrical power supply including an electronic controller in electrical communication with a DC/DC converter and a current sensor configured to measure a current of the DC/DC converter, the DC/DC converter configured to be connected to a power conductor of the electrical power bus via a first switch integral with the DC/DC converter and configured to be connected to a ground conductor of the electrical power bus via a second switch, the electronic controller configured to: control the first and second switches to disconnect the DC/DC converter from the electrical power bus based on if the current of the current of the DC/DC converter exceeds a predetermined current threshold.

In some aspects, the techniques described herein relate to an electrical power supply configured to provide electrical power to an electrical power bus, the electrical power supply including an electronic controller in electrical communication with a DC/DC converter and a current sensor configured to measure a current of the DC/DC converter, the DC/DC converter configured to be connected to a power conductor of the electrical power bus via a first switch integral with the DC/DC converter and configured to be connected to a ground conductor of the electrical power bus via a second switch, the electronic controller configured to: control the first and second switches to disconnect the DC/DC converter from the electrical power bus based on if the voltage of the electrical power bus is less than a predetermined voltage threshold.

In some aspects, the techniques described herein relate to an electronic controller configured to control an electrical power supply connected to an electrical power bus, the electrical power supply having a DC/DC converter and a current sensor configured to measure a current of the DC/DC converter, the DC/DC converter configured to be connected to a power conductor of the electrical power bus via a first switch integral with the DC/DC converter and configured to be connected to a ground conductor of the electrical power bus via a second switch, the electronic controller including a central processing unit; and a computer readable medium storing instructions that, when executed by the central processing unit, cause the electronic controller to: control the first and second switches to disconnect the DC/DC converter from the electrical power bus based on if the current of the current of the DC/DC converter exceeds a predetermined current threshold or if a voltage of the electrical power bus is less than a predetermined voltage threshold.

The ultracapacitor module will now be described, by way of example with reference to the accompanying drawings, in which:
FIG. 1 shows an isometric view of an electrical power supply including a DC/DC converter according to some embodiments.
FIG. 2 shows a schematic diagram of a back-up electrical power supply including a DC/DC converter according to some embodiments.
FIG. 3 shows a control diagram of a back-up electrical power supply according to some embodiments.
FIG. 4 shows a schematic diagram of an electrical power supply including a DC/DC converter according to some embodiments.

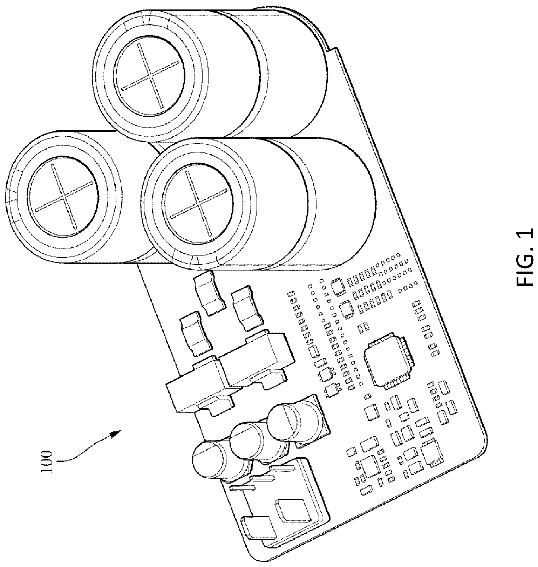

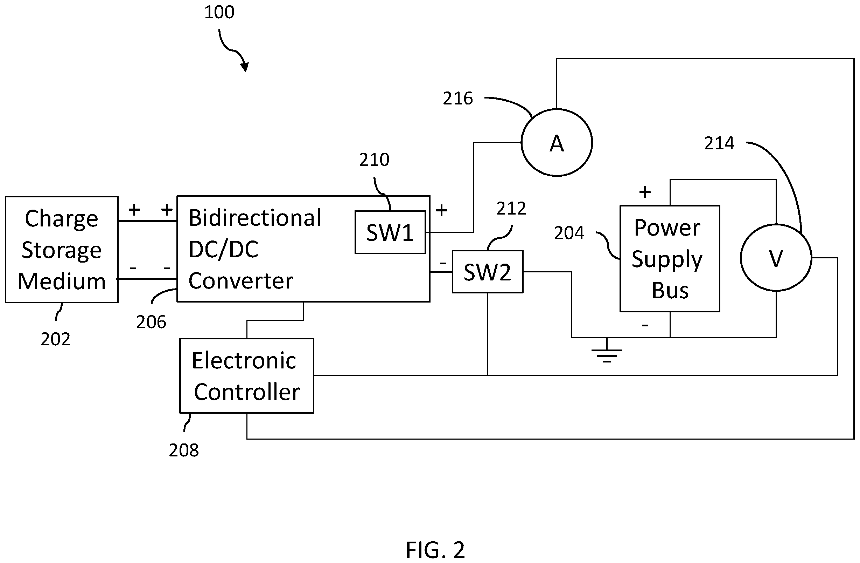

A non-limiting example of an electrical power supply is shown in FIG. 1. The illustrated electrical power supply of FIG. 1 is a back-up electrical power supply 100. As shown in the schematic diagram of FIG. 2, the back-up electrical power supply 100 has a charge storage medium 202 that is designed to provide electrical power to an electrical power bus 204 when a primary power supply is unable to provide adequate power to the electrical power bus 204. In this example, the charge storage medium 202 includes an ultracapacitor cell stack that has several ultracapacitor cells. As used herein, an ultracapacitor cell is a capacitive charge storage device having a capacitance of at least 100 farads. In alternative embodiments, the charge storage medium 202 may include a fast charge/discharge battery.

As shown in FIG. 2, the back-up electrical power supply 100 further includes an interleaved multi-phase bi-directional boost/buck DC/DC converter 206 that is capable of conducting at least the same current as the charge storage medium 202 as electric current flows into or out of the charge storage medium 202. Under the control of an electronic controller 208, the DC/DC converter 206 may quickly switch between operating in boost or buck modes to regulate the desired target voltage of the electrical power bus 204.

The back-up electrical power supply 100 has a pair of metal-oxide silicon field effect transistors (MOSFETs) as first and second switches 210, 212 labeled "SW1"and "SW2" in FIG. 2. The first switch 210 and/or the second switch 212 may be insulated-gate bipolar transistors (IGBTs) in alternative embodiments. However, IGBTs, usually require an antiparallel diode if used in this application. IGBTs do not typically have such a diode integral to the IGBT. The body diode is an intrinsic part of the MOSFET. Two MOSFETs may be desired because a MOSFET can only block voltage or current in one direction. The first switch 210 is integrated into the DC/DC converter 206 and the second switch 212 is connected in series between the ground output of the back-up electrical power supply 100 as shown in FIG. 2 and the ground conductor of the electrical power bus 204. The first and second switches 210, 212 may be used to protect against the damaging effects of reverse battery or extreme over-voltage being applied to the back-up electrical power supply 100. The first and second switches 210, 212 may also be used to block the flow of unintended current through DC/DC converter 206 when the voltage of the electrical power bus 204 is lower than the voltage of the charge storage medium 202. These first and second switches 210, 212 can be used to avoid an unexpected discharge of the charge storage medium 202 and preserve energy for when the charge storage medium 202 may be needed to provide back-up power to the loads on the electrical power bus 204. The avoidance of a complete discharge also reduces the energy required to be provided to the charge storage medium 202 to recharge. The bus voltage value when the switches are opened is preferably equal to the point at which the bus voltage is too low to properly operate the loads connected to the bus.

The states of the first and second switches 210, 212 to avoid undesired discharge of the charge storage medium 202 are as follows:
- The first and second switches 210, 212 are closed when the bus voltage measured by a voltage sensor 214 is above a threshold and charge storage medium current and voltage is controllable by the DC/DC converter 206. Controllable status may be an input to the electronic controller 208 from the vehicle. Current measured by the current sensor 216 may also be used to control the back-up electrical power supply 100 and may be used to set the threshold. The vehicle indicates a threshold voltage and transmits this threshold to the back-up electrical power supply 100.
- The first and second switches 210, 212 are open when the bus voltage is below the threshold and the bus voltage is not controllable by the DC/DC converter 206 to prevent unintentional discharge of the charge storage medium 202 when the back-up electrical power supply 100 is outside its normal operating limits.

In a non-limiting example, the threshold at which the first and second switches 210, 212 are opened may be 6.0V. The bus voltage may be set to protect the back-up electrical power supply 100 from unintentional discharge even when the DC/DC converter 206 is not operating. If the bus voltage is less than the voltage of the charge storage medium 202 when the switches are closed, there may be a conduction path through the diodes of the DC/DC converter 206. For proper operation of the DC/DC converter 206, the bus voltage needs to be higher than the charge storage medium voltage. If there is a use case that the bus voltage is dropping and the back-up electrical power supply 100 is providing current to the voltage bus trying to prevent the voltage drop, then if the voltage of the electrical power bus 204 recovers and does not drop below the threshold, then the first and second switches 210, 212 are not opened. If the electrical power bus 204 voltage falls below the threshold, then the first and second switches 210, 212 are opened and the back-up electrical power supply 100 stops providing power.

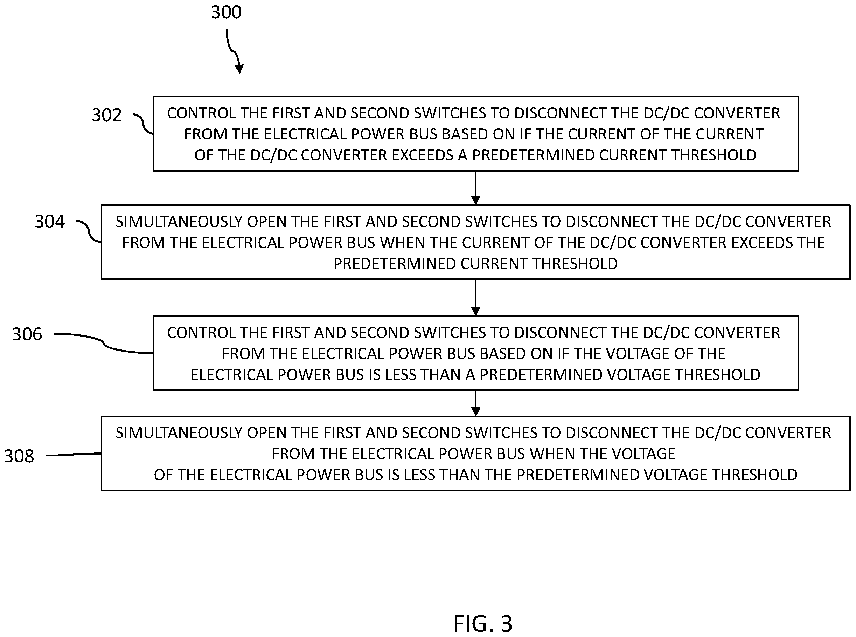

FIG. 3 is a flowchart of a method 300 of controlling the first and second switches 210, 212 under the command of the electronic controller 208 based on instructions executed by the electronic controller 208 that are contained in a computer readable medium.

At step 302, the electronic controller 208 controls the first and second switches 210, 212 to disconnect the DC/DC converter 206 from the electrical power bus 204 based on if the current of the current through the DC/DC converter 206 detected by the current sensor 216 exceeds a predetermined current threshold.

At step 304, the electronic controller 208 simultaneously opens the first and second switches 210, 212 to disconnect the DC/DC converter 206 from the electrical power bus 204 when the current through the DC/DC converter 206 detected by the current sensor 216 exceeds the predetermined current threshold.

At step 306, the electronic controller 208 controls the first and second switches 210, 212 to disconnect the DC/DC converter 206 from the electrical power bus 204 based on if the voltage of the electrical power bus 204 detected by the voltage sensor 214 is less than a predetermined voltage threshold.

At step 308, the electronic controller 208 simultaneously opens the first and second switches 210, 212 to disconnect the DC/DC converter 206 from the electrical power bus 204 when the voltage of the electrical power bus 204 detected by the voltage sensor 214 is less than the predetermined voltage threshold.

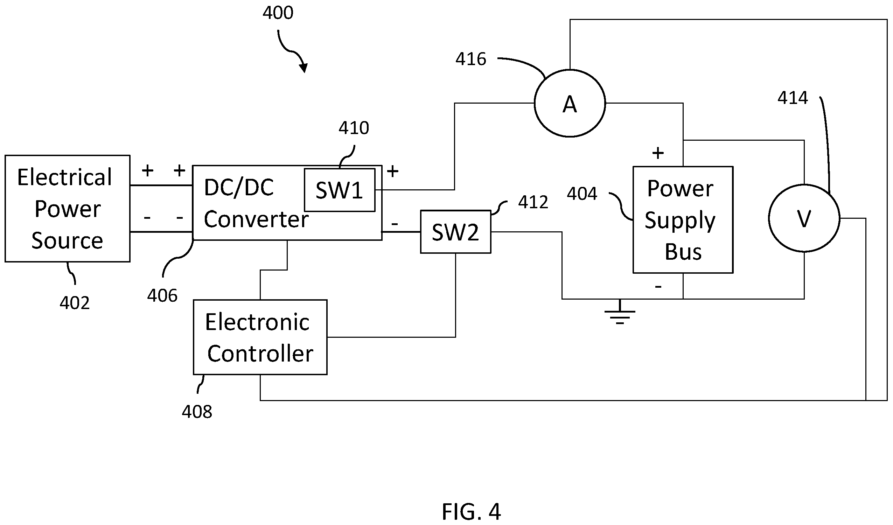

FIG. 4 shows an example of another electrical power supply 400. The back-up electrical power supply 100 includes a boost/buck DC/DC converter 406. Under the control of an electronic controller 408, the DC/DC converter 406 may quickly switch between operating in boost or buck modes to regulate the desired target voltage of the electrical power bus 404.

The electrical power supply 400 has a pair of MOSFETs acting as first and second switches 410, 412 labeled "SW1"and "SW2". In other embodiments, the first switch 410 and/or the second switch 412 may be IGBTs. The first switch 410 is integral with the DC/DC converter 406 and the second switch 412 is connected in series between the ground output of the electrical power supply 400 and the ground conductor of the electrical power bus 404 as shown in FIG. 4.

The alternative embodiment of the electrical power supply 400 does not include a charge storage medium but is powered by an electrical power source 402 of a different type that supplies electrical power to the electrical power bus 404 via the electrical power supply 400 but does not draw power from the electrical power bus 404. Therefore, the DC/DC converter 406 may be a boost/buck DC/DC converter rather than a bidirectional boost/buck DC/DC converter. The electronic controller 408 is configured to open the first and second switches 410, 412 if the current through the DC/DC converter 406 sensed by the current sensor 416 exceeds a threshold or if the voltage of the electrical power bus 404 detected by the voltage sensor 414 falls below a lower voltage threshold and/or goes above an upper voltage threshold. The first and second switches 410, 412 may be used to protect against the damaging effects of reverse battery or extreme over-voltage being applied to the electrical power supply 400. The first and second switches 410, 412 may also be used to block the flow of unintended current when the voltage of the electrical power bus 404 is lower than the voltage of the electrical power source 402.

### Discussion of Possible Embodiments

In some aspects, the techniques described herein relate to an electrical power supply configured to provide electrical power to an electrical power bus, the electrical power supply including an electronic controller in electrical communication with a DC/DC converter and a current sensor configured to measure a current of the DC/DC converter, the DC/DC converter configured to be connected to a power conductor of the electrical power bus via a first switch integral with the DC/DC converter and configured to be connected to a ground conductor of the electrical power bus via a second switch, the electronic controller configured to: control the first and second switches to disconnect the DC/DC converter from the electrical power bus based on if the current of the current of the DC/DC converter exceeds a predetermined current threshold.

The electrical power supply of the preceding paragraph can optionally include, additionally and/or alternatively any, one or more of the following features/steps, configurations and/or additional components.

In some aspects, the techniques described herein relate to an electrical power supply, wherein the DC/DC converter includes a bi-directional boost/buck DC/DC converter.

In some aspects, the techniques described herein relate to an electrical power supply, wherein the DC/DC converter includes an interleaved multi-phase bi-directional boost/buck DC/DC converter.

In some aspects, the techniques described herein relate to an electrical power supply, further including a charge storage medium, the DC/DC converter configured to provide electrical power to, and receive electrical power from, the charge storage medium.

In some aspects, the techniques described herein relate to an electrical power supply, wherein the charge storage medium includes ultracapacitors.

In some aspects, the techniques described herein relate to an electrical power supply, wherein the electronic controller is configured to simultaneously open the first and second switches to disconnect the DC/DC converter from the electrical power bus when the current of the DC/DC converter exceeds the predetermined current threshold.

In some aspects, the techniques described herein relate to an electrical power supply, wherein the first and second switches include metal-oxide silicon field effect transistors.

In some aspects, the techniques described herein relate to an electrical power supply, the second switch is connected to a ground of the DC/DC converter.

In some aspects, the techniques described herein relate to an electrical power supply, wherein the electronic controller is in electrical communication with a voltage sensor configured to measure a voltage of the electrical power bus and wherein the electronic controller is configured to control the first and second switches to disconnect the DC/DC converter from the electrical power bus based on if the voltage of the electrical power bus is less than a predetermined voltage threshold.

In some aspects, the techniques described herein relate to an electrical power supply, wherein the electronic controller is configured to simultaneously open the first and second switches to disconnect the DC/DC converter from the electrical power bus when the voltage of the electrical power bus is less than the predetermined voltage threshold.

In some aspects, the techniques described herein relate to an electrical power supply configured to provide electrical power to an electrical power bus, the electrical power supply including an electronic controller in electrical communication with a DC/DC converter and a current sensor configured to measure a current of the DC/DC converter, the DC/DC converter configured to be connected to a power conductor of the electrical power bus via a first switch integral with the DC/DC converter and configured to be connected to a ground conductor of the electrical power bus via a second switch, the electronic controller configured to: control the first and second switches to disconnect the DC/DC converter from the electrical power bus based on if the voltage of the electrical power bus is less than a predetermined voltage threshold.

The electrical power supply of the preceding paragraph can optionally include, additionally and/or alternatively any, one or more of the following features/steps, configurations and/or additional components.

In some aspects, the techniques described herein relate to an electrical power supply, wherein the DC/DC converter includes a bi-directional boost/buck DC/DC converter.

In some aspects, the techniques described herein relate to an electrical power supply, wherein the DC/DC converter includes an interleaved multi-phase bi-directional boost/buck DC/DC converter.

In some aspects, the techniques described herein relate to an electrical power supply, further including a charge storage medium, the DC/DC converter configured to provide electrical power to, and receive electrical power from, the charge storage medium.

In some aspects, the techniques described herein relate to an electrical power supply, wherein the charge storage medium includes ultracapacitors.

In some aspects, the techniques described herein relate to an electrical power supply, wherein the electronic controller is configured to simultaneously open the first and second switches to disconnect the DC/DC converter from the electrical power bus when the voltage of the electrical power bus is less than the predetermined voltage threshold.

In some aspects, the techniques described herein relate to an electrical power supply, wherein the first and second switches include metal-oxide silicon field effect transistors.

In some aspects, the techniques described herein relate to an electrical power supply, wherein the second switch is connected to a ground of the DC/DC converter.

In some aspects, the techniques described herein relate to an electronic controller configured to control an electrical power supply connected to an electrical power bus, the electrical power supply having a DC/DC converter and a current sensor configured to measure a current of the DC/DC converter, the DC/DC converter configured to be connected to a power conductor of the electrical power bus via a first switch integral with the DC/DC converter and configured to be connected to a ground conductor of the electrical power bus via a second switch, the electronic controller including a central processing unit; and a computer readable medium storing instructions that, when executed by the central processing unit, cause the electronic controller to: control the first and second switches to disconnect the DC/DC converter from the electrical power bus based on if the current of the current of the DC/DC converter exceeds a predetermined current threshold or if a voltage of the electrical power bus is less than a predetermined voltage threshold.

The electronic controller of the preceding paragraph can optionally include, additionally and/or alternatively any, one or more of the following features/steps, configurations and/or additional components.

In some aspects, the techniques described herein relate to an electronic controller, the electronic controller being configured to simultaneously open the first and second switches to disconnect the DC/DC converter from the electrical power bus when the current through the DC/DC converter exceeds the predetermined current threshold or when the voltage of the electrical power bus is less than the predetermined voltage threshold.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electrical power supply (100, 400) configured to provide electrical power to an electrical power bus (204, 404), the electrical power supply (100, 400) comprising:
an electronic controller (208, 408) in electrical communication with a DC/DC converter (206, 406) and a current sensor (216, 416) configured to measure a current of the DC/DC converter (206, 406), the DC/DC converter (206, 406) configured to be connected to a power conductor of the electrical power bus (204, 404) via a first switch (210, 410) integral with the DC/DC converter (206, 406) and configured to be connected to a ground conductor of the electrical power bus (204, 404) via a second switch (212, 412), the electronic controller (208, 408) configured to:
control the first and second switches (210, 212, 410, 412) to disconnect the DC/DC converter (206, 406) from the electrical power bus (204, 404) based on if the current of the current of the DC/DC converter (206, 406) exceeds a predetermined current threshold.

2. The electrical power supply (100) in accordance with claim 1, wherein the DC/DC converter (206) comprises a bi-directional DC/DC converter (206).

3. The electrical power supply (100) in accordance with claim 2, wherein the DC/DC converter (206) comprises an interleaved multi-phase bi-directional DC/DC converter (206).

4. The electrical power supply (100) in accordance with claim 2 or 3, further comprising a charge storage medium (202), the DC/DC converter (206) configured to provide electrical power to, and receive electrical power from, the charge storage medium (202).

5. The electrical power supply (100) in accordance with claim 4, wherein the charge storage medium (202) comprises ultracapacitors.

6. The electrical power supply (100, 400) in accordance any oner of the preceding claims, wherein the electronic controller (208, 408) is configured to simultaneously open the first and second switches (210, 212, 410, 412) to disconnect the DC/DC converter (206, 406) from the electrical power bus (204, 404) when the current of the DC/DC converter (206, 406) exceeds the predetermined current threshold.

7. The electrical power supply (100, 400) in accordance any oner of the preceding claims, wherein the first and second switches (210, 212, 410, 412) comprise metal-oxide silicon field effect transistors.

8. The electrical power supply (100, 400) in accordance any oner of the preceding claims, the second switch is connected to a ground of the DC/DC converter (206, 406).

9. The electrical power supply (100, 400) in accordance any oner of the preceding claims, wherein the electronic controller (208, 408) is in electrical communication with a voltage sensor (214, 414) configured to measure a voltage of the electrical power bus (204, 404) and wherein the electronic controller (208, 408) is configured to control the first and second switches (210, 212, 410, 412) to disconnect the DC/DC converter (206, 406) from the electrical power bus (204, 404) based on if the voltage of the electrical power bus (204, 404) is less than a predetermined voltage threshold.

10. The electrical power supply (100, 400) in accordance with claim 9, wherein the electronic controller (208, 408) is configured to simultaneously open the first and second switches (210, 212, 410, 412) to disconnect the DC/DC converter (206, 406) from the electrical power bus (204, 404) when the voltage of the electrical power bus (204, 404) is less than the predetermined voltage threshold.

11. An electrical power supply (100, 400) configured to provide electrical power to an electrical power bus (204, 404), the electrical power supply (100, 400) comprising:
an electronic controller (208, 408) in electrical communication with a DC/DC converter (206, 406) and a current sensor (216, 416) configured to measure a current of the DC/DC converter (206, 406), the DC/DC converter (206, 406) configured to be connected to a power conductor of the electrical power bus (204, 404) via a first switch (210, 410) integral with the DC/DC converter (206, 406) and configured to be connected to a ground conductor of the electrical power bus (204, 404) via a second switch (212, 412), the electronic controller (208, 408) configured to:
control the first and second switches (210, 212, 410, 412) to disconnect the DC/DC converter (206, 406) from the electrical power bus (204, 404) based on if the voltage of the electrical power bus (204, 404) is less than a predetermined voltage threshold.

12. The electrical power supply (100) in accordance with claim 11, wherein the DC/DC converter (206) comprises a bi-directional DC/DC converter (206).

13. The electrical power supply (100) in accordance with claim 12, further comprising a charge storage medium (202), the DC/DC converter (206) configured to provide electrical power to, and receive electrical power from, the charge storage medium (202).

14. The electrical power supply (100) in accordance with claim 13, wherein the charge storage medium (202) comprises ultracapacitors.

15. The electrical power supply (100) in accordance any one of claims 11 to 14, wherein the electronic controller (208, 408) is configured to simultaneously open the first and second switches (210, 212, 410, 412) to disconnect the DC/DC converter (206, 406) from the electrical power bus (204, 404) when the voltage of the electrical power bus (204, 404) is less than the predetermined voltage threshold.
